# EUROPÄISCHE PATENTSCHRIFT

(11) **EP 0 872 269 B1**
(45) Veröffentlichungstag und Bekanntmachung des Hinweises auf die Patenterteilung: **14.05.2003**
(21) Anmeldenummer: 98103534.8
(22) Anmeldetag: 28.02.1998
(51) Int. Cl.: B01D 46/42, D01G 15/82, D01H 11/00

(54) **Verfahren und Vorrichtung zum Ausfiltern von Fasern aus einem Luftstrom**
Process and apparatus for filtering fibers from an air current
Procédé et dispositif pour la filtration de fibres d'un courant d'air

(30) Priorität: 04.04.1997 DE 19713747
(43) Veröffentlichungstag der Anmeldung: 21.10.1998
(73) Patentinhaber: Rieter Ingolstadt Spinnereimaschinenbau AG, 85046 Ingolstadt (DE)
(72) Erfinder: Becker, Rudolf, 85051 Ingolstadt (DE); Strobel, Michael, 85072 Eichstätt (DE)
(74) Vertreter: Bergmeier, Werner, Dipl.-Ing.

(56) Entgegenhaltungen:
- DE-A- 3 527 656
- DE-A- 4 427 771
- US-A- 3 997 936

## Beschreibung

Die vorliegende Erfindung betrifft ein Verfahren gemäß Oberbegriff des Anspruches 1 sowie eine Vorrichtung zur Durchführung dieses Verfahrens.

Zum Ausfiltern von Fasern aus einem Luftstrom wird dieser durch ein Filter hindurchgeführt, welche das vom Luftstrom mitgeführte Fasermaterial zurückhält. Dieses Fasermaterial setzt sich auf dem Filter fest und reduziert hierdurch die Absaugleistung, die sich durch ein Rohrsystem an verschiedenen Stellen der Maschine auswirkt, um dort freiwerdende, ungewünschte Fasern abzuführen. Um die Funktionsfähigkeit des Absaugsystems zu gewährleisten, wird deshalb von Zeit zu Zeit das Filter mit Hilfe eines Abstreifers gereinigt. Gemäß einem bekannten Verfahren (DE 44 27 771 A1) wird zu diesem Zweck ein vertikaler Abstreifer in horizontaler Richtung über das Filter geführt, sodann von dem Filter abgehoben und in seine Ausgangsstellung zurückgeführt. Um dieses Verfahren durchführen zu können, wird eine komplizierte Vorrichtung benötigt, um dem Abstreifer die gewünschten Bewegungen zu erteilen. Darüber hinaus kann sich Fasermaterial am Abstreifer festsetzen und so den Wirkungsgrad desselben herabsetzen.

Aufgabe der vorliegenden Erfindung ist es daher, ein Verfahren und eine Vorrichtung mit höherem Wirkungsgrad zu schaffen, wobei die Vorrichtung einfach im Aufbau und in ihrer Steuerung sein soll.

Diese Aufgabe wird erfindungsgemäß durch die Merkmale des Anspruches 1 gelöst. Dadurch, daß der Abstreifer über die Länge des Filters hinaus bewegt wird, so daß der Abstreifer an keiner Kontaktfläche mehr anliegt, kann das mittels des Abstreifers von dem Filter gelöste Fasermaterial vom Abstreifer abfallen in einen Bereich, wo es zu gegebener Zeit manuell oder automatisch entsorgt wird.

Prinzipiell ist jede Art der Arbeitsbewegung, z. B. linear oder drehend möglich. Besonders vorteilhaft, da gleiche Relativbewegungen verursachend ist ein Linearantrieb.

Vorzugsweise wird dem Abstreifer eine Hin- und Herbewegung gemäß Anspruch 3 erteilt, da dies in einfacher Weise eine Optimierung des Reinigungsvorganges ermöglicht. Eine weitere Optimierung ist in einfacher und vorteilhafter Weise durch Weiterbildung des erfindungsgemäßen Verfahrens nach Anspruch 4 möglich, da hierdurch eine besonders intensive Reinigung des Filters erreicht wird.

Um Beschädigungen des Abstreifers vorzubeugen und dennoch eine optimale Reinigung des Filters zu gewährleisten, kann eine weitere bevorzugte Weiterbildung des erfindungsgemäßen Verfahrens nach Anspruch 5 vorgesehen werden. Da im Zuge des Abstreifens von Fasermaterial vom Filter die vom Abstreifer mitgenommene Masse des Fasermaterials zunimmt und zudem das Fasermaterial sich auf dem Filter in Vliesform verdichtet hat, bildet dieses beim Abstreifen einen Wickel, der ohne Anliegen des Abstreifers am Filter das vliesförmige Fasermaterial durch Aufrollen vom Filter abhebt.

Prinzipiell ist die Bewegungsrichtung des Abstreifers nicht ausschlaggebend, doch hat sich gezeigt, daß durch Bewegung des Abstreifers gemäß Anspruch 6 die Schwerkraft in besonders effektiver Weise ausgenützt werden kann, da das vom Filter abgeschabte Material nicht am Abstreifer entlang zu fallen braucht, wo es wiederum festgehalten werden kann. Damit das abgeschabte Fasermaterial sofort und unbehindert nach unten fallen könnte, wird vorteilhafterweise vorgesehen, daß die beiden Bewegungsphasen gemäß Anspruch 7 festgelegt werden.

Der Unterdruck, der losgelöste Fasern zum Filter bringt, hat die Aufgabe, fluggefährdete Stellen einer Textilmaschine flugfrei zu halten. Hierzu ist ein gewisser Unterdruck erforderlich. Statt, wie bisher üblich, die Reinigung des Filters in Abhängigkeit von der Arbeitszeit oder (bei Strecken) verarbeiteter Bandlänge durchzuführen, wird das erfindungsgemäße Verfahren zweckmäßigerweise gemäß Anspruch 8 ausgestaltet. Hierdurch wird auf einfache und direkte Weise die Aufrechterhaltung des gewünschten Unterdruckes gewährleistet. Es hat sich gezeigt, daß die Reinigung des Filters mit Hilfe des geschilderten Verfahrens sehr effektiv ist. Sollte bei schwierigen Materialien dennoch Fasermaterial am Filter hängenbleiben, so kann es von Vorteil sein, wenn gemäß Anspruch 9 eine Reinigung des Filters sofort wiederholt wird, ohne erst abzuwarten, bis die untere Unterdruck-Grenze für das Auslösen der Reinigungsfunktion erreicht wird.

Bei den üblichen Verfahren zur Reinigung von Filtern wird der Unterdruck abgeschaltet. Es hat sich jedoch gezeigt, daß dies beim Verfahren nach der vorliegenden Erfindung nicht erforderlich ist, weshalb vorzugsweise die Reinigung des Filters gemäß Anspruch 10 ohne Unterbrechen des Unterdruckes durchgeführt wird.

Zur Durchführung des oben geschilderten Verfahrens ist erfindungsmäß eine gemäß Anspruch 11 ausgebildete Vorrichtung vorgesehen. Durch die Freigabe des Abstreifers in seinen beiden Endstellungen kann sich das vom Filter abgelöste Fasermaterial in einfacher Weise vom Abstreifer lösen. Dies wird erreicht, ohne daß hierzu dem Abstreifer eine komplexe Bewegung erteilt werden muß. Vielmehr genügt hierfür eine Linearbewegung, die lediglich länger ist als das Filter.

Durch eine weitere zweckmäßige Weiterbildung des Erfindungsgegenstandes gemäß Anspruch 12 werden für jeden Reinigungsvorgang stets gleiche Arbeitsverhältnisse sichergestellt und Relativgeschwindigkeiten zwischen Filter und Abstreifer sichergestellt. Dies bewirkt eine zuverlässige Reinigung des Filters und des Abstreifers.

Eine erfindungsgemäße Ausbildung der erfindungsgemäßen Vorrichtung nach Anspruch 13 ermöglicht bei der Bewegung des Abstreifers in der einen Bewegungsrichtung ein wirkungsvolles Abstreifen des Fasermaterials vom Filter, während evtl. auf der Faserfläche verbliebene Faserreste in der anderen Bewegungsrichtung des Abstreifers unter diesem hindurch auf dessen andere Seite gelangen können, so daß sie beim nächsten Reinigungsvorgang wirksam abgestreift werden können. Hierbei ist eine Neigung des Abstreifers gemäß Anspruch 14 besonders vorteilhaft.

Es hat sich gezeigt, daß durch Wahl einer einseitig nach Anspruch 15 abgestützten elastischen Lippe ein Abstreifen während der ersten Bewegungsphase und ein Passieren von evtl. noch am Filter verbliebenem Fasermaterial während der zweiten Bewegungsphase am sichersten erreicht wird, wobei der Abstreifeffekt durch Auswahl der Elastizität der Lippe gemäß Anspruch 16 optimiert wird. Ein weitere Verbesserung der Abstreifarbeit wird durch Ausbildung der elastischen Lippe gemäß Anspruch 17 erzielt, wobei durch Weiterbildung der elastischen Lippe nach Anspruch 18 zusätzlich das Zurückgleiten der elastischen Lippe über evtl. am Filter verbliebenes Fasermaterial verbessert wird.

Die verschiedenen, auf einer Textilmaschine zur Verarbeitung gelangenden Fasermaterialien haben unterschiedliche Eigenschaften. Es ist deshalb von Vorteil, wenn gemäß Anspruch 19 eine Anpassung an das vom Filter abzustreifende Fasermaterial durch Anpassung der Elastizität der elastischen Lippe möglich ist, wobei sich je nach Material einen Abstand der Abstützung von der Arbeitskante nach Anspruch 20 als besonders günstig erwiesen hat.

Zur Erzielung einer hohen Steifigkeit des Abstreifers ist dieser zweckmäßigerweise nach Anspruch 21 und evtl. 22 ausgebildet. Um Faseranhäufungen an den Muttern zu verhindern, die sich in einem strömungstechnisch ungünstigen Bereich befinden, wird dieser vorzugsweise gemäß Anspruch 23 abgeschirmt.

Um unabhängig von der abzustreifenden Fasermenge ein Kippen des Abstreifers parallel zur Oberfläche des Filters auszuschließen, ist es von Vorteil, wenn er gemäß Anspruch 24 ausgebildet und geführt ist.

Da sich während des Abstreifens des Filters ein immer größerer Vlies- oder Wattewickel bildet, ist eine Weiterbildung der erfindungsgemäßen Vorrichtung gemäß Anspruch 25 besonders zweckmäßig, wobei der Neigungswinkel vorzugsweise gemäß Anspruch 26 festgelegt wird.

Prinzipiell ist die Anordnung der durch die Führungen festgelegten Bewegungsbahn des Abstreifers ohne ausschlaggebenden Belang. Allerdings läßt sich durch Ausbildung des Erfindungsgegenstandes in der Weise, daß die Führungen im wesentlichen vertikal angeordnet sind, auf besonders einfache Weise erreichen, daß das vom Filter abgelöste Fasermaterial vom Abstreifer abfallen kann. Dieser Effekt wird noch durch die zweckmäßige Weiterbildung des Erfindungsgegenstandes gemäß Anspruch 27 intensiviert.

Durch Ausbildung der erfindungsgemäßen Vorrichtung nach Anspruch 28 kann das vom Abstreifer evtl. nach oben mitgenommene Fasermaterial am Abstreifer vorbei der Wirkung der Saugluftströmung und der Schwerkraft folgen und nach unten fallen, wo das abgelöste Fasermaterial für die spätere Entsorgung gesammelt wird.

Sowohl für die Entflugung an den verschiedenen Stellen der Maschine, von wo die losgelösten Fasern abgesaugt und dem Filter zugeführt werden, als auch für das Zuführen der vom Filter abgelösten Fasern in einen sich unterhalb des Filters befindenden Sammelraum ist es wichtig, daß stets ein ausreichend starker Unterdruck wirksam ist. Durch die erfindungsgemäße Weiterbildung der Vorrichtung gemäß Anspruch 29 wird diese Wirksamkeit sichergestellt, ohne daß in Anpassung an unterschiedliche Fasermaterialien unterschiedliche Reinigungsfrequenzen eingestellt oder beachtet werden müssen. Die Steuerung der Reinigung erfolgt durch die geschilderte, erfindungsgemäße Ausbildung stets in automatischer Anpassung an die jeweiligen Gegebenheiten, wobei eine weitere Anpassung an verschiedene Materialien durch Programmieren der Steuervorrichtung gemäß einem oder mehreren der Anspruch 30 erzielt werden kann.

Damit sich das Filter nicht infolge des auf ihn einwirkenden Unterdruckes übermäßig durchbiegen kann, so daß der Abstreifer trotz der Elastizität der Lippe nicht hinreichend am Filter anliegen kann, ist es von Vorteil, wenn das Filter gemäß Anspruch 31 abgestützt ist. Dabei weisen die Stützstreben zweckmäßigweise Löcher gemäß Anspruch 32 aus, wodurch erreicht wird, daß das sich auf dem Filter zwischen zwei Reinigungsvorgängen bildende Vlies zusammenhängend ausgebildet ist, was das Abstreifen wesentlich erleichtert.

Vorzugsweise ist nach Anspruch 33 die Sammelkammer für das abgestreifte Material von der Filterkammer getrennt, da auf diese Weise ein Hochsaugen des im Sammelraum bereits angehäuften Fasermaterials nicht erfolgt. Eine nach Anspruch 34 vorzugsweise vorgesehene Rutschfläche begünstigt darüber hinaus das Abführen des abgestreiften Fasermaterials in die Sammelkammer, da die Rutschfläche für ein Anhäufen des abgestreiften Fasermaterials sorgt, so daß das zusammenhängende Fasermaterial eine derartige Masse aufweist, daß es nicht zum Filter zurückgesaugt werden kann.

Das erfindungsgemäße Verfahren und die erfindungsgemäße Vorrichtung sind von hoher Wirksamkeit und Sicherheit. Dabei ist die Vorrichtung einfach im Aufbau und benötigt auch lediglich einen einfachen Antrieb, insbesondere nur einen Linearantrieb, so daß die Lösung darüber hinaus kostengünstig in der Herstellung ist. Die Steuerung der Reinigungstätigkeit in Abhängigkeit von dem im Absaugkasten herrschenden Unterdruck erleichtert ferner die Beibehaltung der Effektivität, ohne daß zusätzliche Kontrollen erforderlich sind, mittels derer ermittelt werden muß, ob die vorgesehenen Reinigungsintervalle auch den Anforderungen genügen.

Ausführungsbeispiele der Erfindung werden nachstehend mit Hilfe von Zeichnungen näher beschrieben. Es zeigen:
- Fig. 1: in perspektivischer Ansicht eine erfindungsgemäß ausgebildete Filtervorrichtung;
- Fig. 2: die in Fig. 1 gezeigte Vorrichtung im Schnitt;
- Fig. 3: in der Seitenansicht einen erfindungsgemäß ausgebildeten Abstreifer während der Rückführbewegung in seine Ausgangsstellung;
- Fig. 4: einen Teil der elastischen Lippe des Abstreifers während seiner Abschabbewegung;
- Fig. 5: eine anders ausgebildete elastische Lippe in der Bewegungsphase entsprechend Fig. 3; und
- Fig. 6: den Erfindungsgegenstand in der Frontansicht.

Bei Textilmaschinen verschiedenster Art fällt während der Arbeit Flug an, der pneumatisch abgesaugt und mit der Transportluft einem Filter zugeführt wird, das das Fasermaterial zurückhält, während die Luft durch das Filter hindurch einer Unterdruckquelle zugeführt wird. Beispielsweise werden bei einer Rotorspinnmaschine im Zusammenhang mit dem Anspinnvorgang, aber auch nach einem Fadenbruch Fasern, Faser- und Fadenbruchstücke pneumatisch abgeführt. Auch in der Vorspinnerei, d. h. in den Spinnerei-Vorbereitungsmaschinen, an Karden etc. entsteht Flug, der abgeführt werden muß.

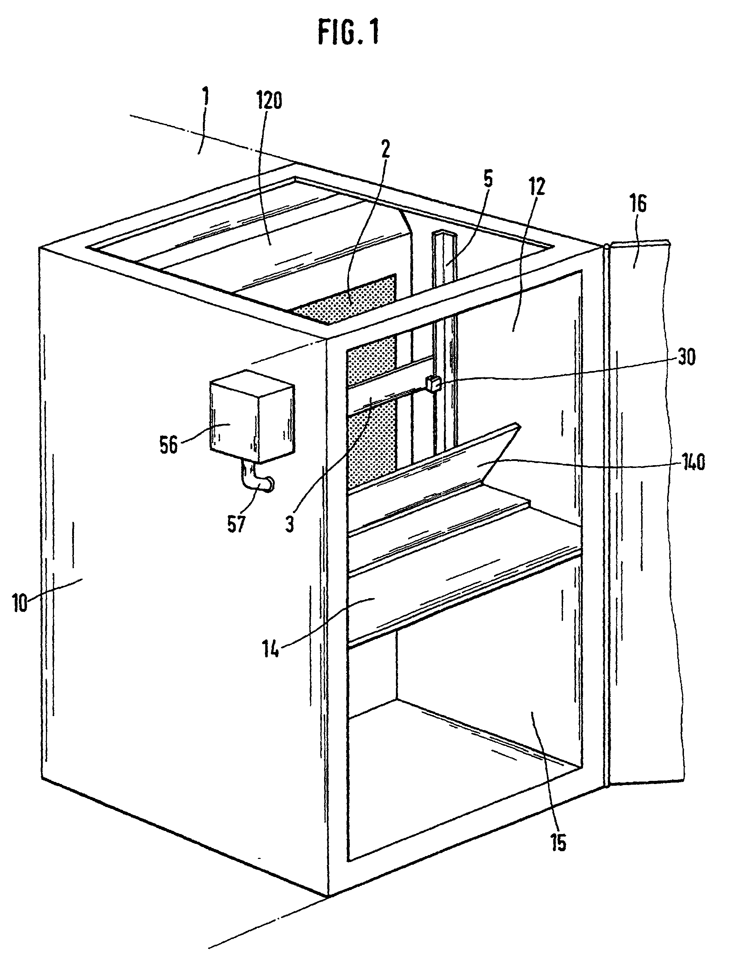

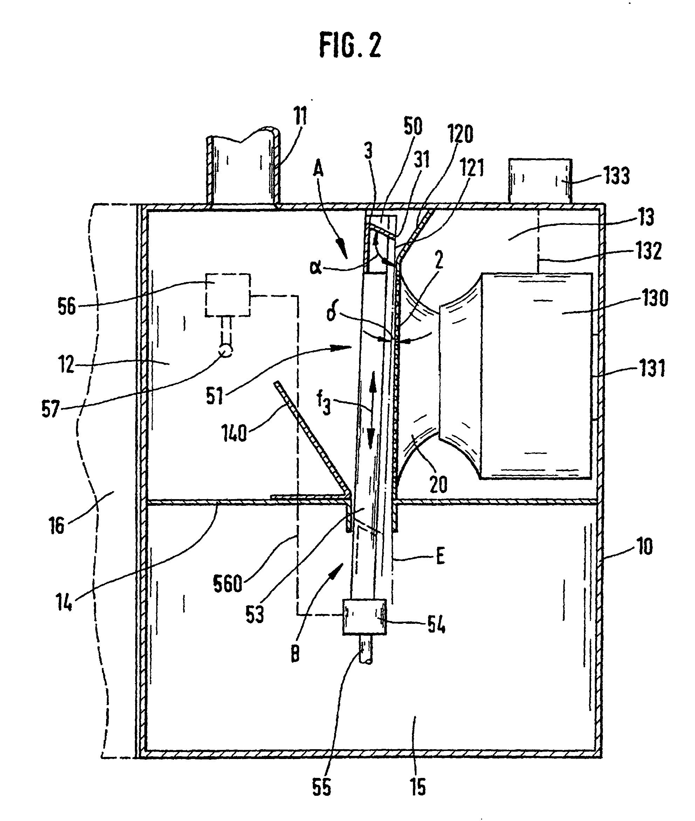

Gemäß den Fig. 1 und 2 ist ein Absaugkasten 10 vorgesehen, der beispielsweise Bestandteil einer Strecke 1 ist (in Fig. 1 strichpunktiert angedeutet). Die Streckwerke (nicht gezeigt) einer derartigen Maschine stehen im Einflußbereich einer Saugluftströmung, mit deren Hilfe lose Fasern und Faserbruchstücke (Flug) aus diesem Bereich abgeführt werden. Die auf diese Weise mit Fasermaterial angereicherte Saugluftströmung wird dem Absaugkasten 10 mit Hilfe einer Rohrleitung 11 (Fig. 2) zugeführt. In den Absaugkasten 10 mündet in der Regel mehr als nur eine derartige Rohrleitung zur Zuführung von mit Fasern angereicherter Saugluft von verschiedenen Stellen der Strecke 1 ein, doch wurde der Übersichtlichkeit der Zeichnung wegen auf die Darstellung weiterer Rohrleitungen verzichtet.

Der Absaugkasten 10 nimmt eine Filterkammer 12 auf, die mit Hilfe eines Filters 2 von einer Absaugkammer 13 (Fig. 2) und durch eine horizontale Wand 14 von einer Sammelkammer 15 getrennt ist.

Der Absaugkasten 10 ist im wesentlichen allseitig geschlossen und weist lediglich die technologisch erforderlichen Öffnungen auf (eine oder mehrere Rohrleitungen 11 etc. zum Zuführen der Fasern mitführenden Luft, evtl. eine weitere Öffnung - nicht gezeigt - zum periodischen Abführen des sich in der Sammelkammer 15 ansammelnden Fasermaterials, Energieversorgungsöffnungen wie z. B. Strom-, Steuer- und Druckluftleitungen usw., auf deren Darstellung verzichtet wurde, um die Zeichnungen nicht zu überladen) sowie eine für die Wartung des Absaugkastens 10 dienende Tür 16, um gegebenenfalls das in der Sammelkammer 15 angesammelte Fasermaterial manuell entsorgen zu können. Für das hier beschriebene Verfahren sowie die entsprechende Vorrichtung hat die Art der Entsorgung jedoch keinerlei wesentliche Bedeutung.

In der Absaugkammer 13 befindet sich eine Unterdruckquelle, die gemäß Fig. 2 durch einen Ventilator 130 gebildet ist, dessen Antriebsmotor 131 mit Hilfe einer Steuerleitung 132 steuermäßig mit einer Steuervorrichtung 133 verbunden ist. Diese Steuervorrichtung 133 arbeitet in an und für sich bekannter Weise und kann zu diesem Zweck beispielsweise Teil der Hauptschaltvorrichtung zum Ein- und Ausschalten der Strecke 1 oder mit dieser auch direkt oder indirekt verbunden sein. Die spezielle Ausbildung dieser Steuervorrichtung 133 ist für die vorliegende Erfindung nicht von Belang.

An die Rückseite des Filters 2 schließt sich ein Trichter 20 an, der sicherstellt, daß die vom Ventilator 130 angesaugte Luft nicht aus der Absaugkammer 13 angesaugt wird, sondern aus der Filterkammer 12 durch das Filter 2 hindurch in den Ventilator 130 gelangt.

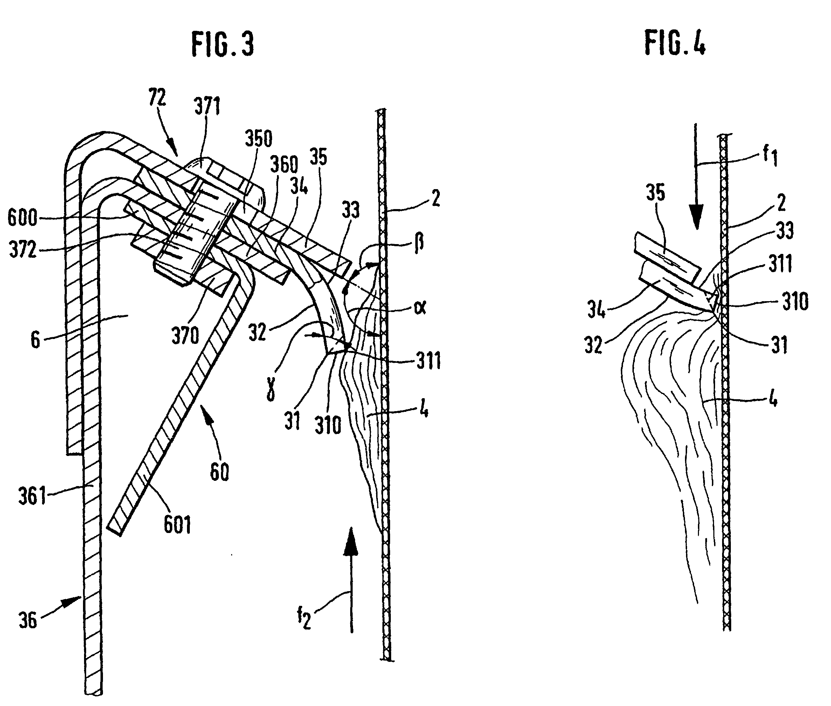

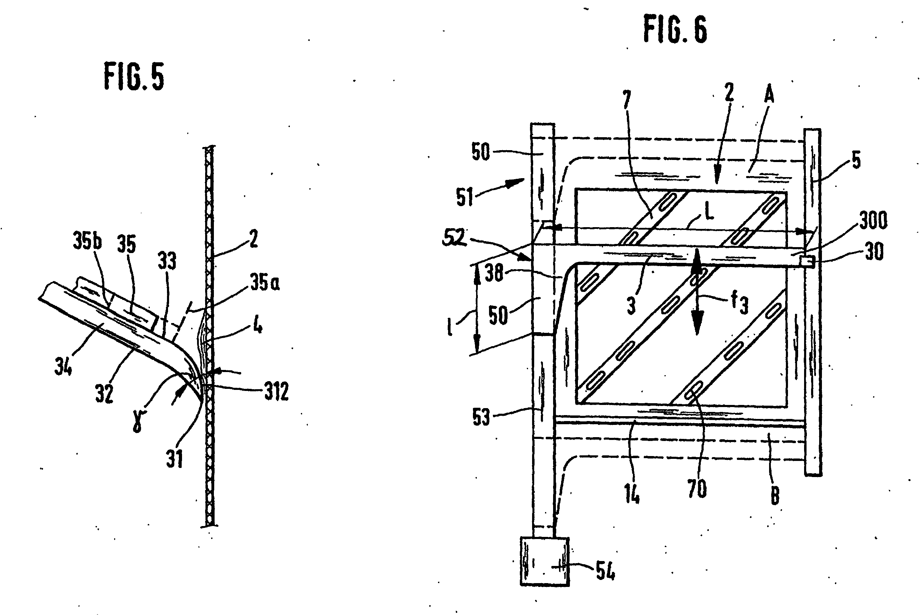

Auf der Ansaugseite des Filters 2, d. h. auf seiner der Filterkammer 12 zugewandten Seite, sammelt sich während des Betriebes Fasermaterial 4 (siehe Fig. 4) an, das mit Hilfe eines Abstreifers 3 vom Filter 2 abgestreift wird. Der Abstreifer 3 erstreckt sich über die volle Breite des Filters 2 und wird beidseitig von dieser in zwei linearen Führungen 5 und 50 geführt. Eine dieser beiden Führungen 5 und 50 (gemäß den Fig. 1 und 6 die Führung 5) ist beim gezeigten Ausführungsbeispiel in Form einer Profilleiste ausgebildet, die durch den Abstreifer 3 bzw. einer an diesem angebrachten Nase 30 in Art einer Gabel mit geringem Spiel umfaßt wird, so daß einerseits eine sichere Führung des Abstreifers 3 und andererseits eine ungehinderte Bewegbarkeit längs der Führung 5 möglich ist. Die andere Führung 50 ist als Linearantrieb 51 ausgebildet, der einen Schlitten 52 (Fig. 6) antreibt, mit dem die Antriebsseite des Abstreifers 3 bewegungsschlüssig verbunden ist.

Gemäß dem in den Fig. 2 und 6 gezeigten Ausführungsbeispiel weist der Linearantrieb 51 einen pneumatischen Zylinder 53 auf, dessen eine Seite über ein Ventil 54 und eine Druckluftleitung 55 mit einer Druckluftquelle (nicht gezeigt) verbunden ist. Falls gewünscht, kann der pneumatische Zylinder 53 beidseitig von seinem nicht gezeigten Antriebskolben je eine Luftkammer (nicht gezeigt) aufweisen, die beide wechselweise mit Druckluft beaufschlagt werden können. Darüber hinaus sind in an sich üblicher Weise nicht gezeigte Leitungen und/oder Auslaßöffnungen vorgesehen, die ein Entleeren der Luftkammer bzw. Luftkammern ermöglichen.

Das Ventil 54 steht über eine Steuerleitung 560 mit einer Steuervorrichtung 56 in Verbindung. Diese Steuervorrichtung 56 ist von der Steuervorrichtung 133 (Fig. 2) für den Antriebsmotor 131 des Ventilators 130 unabhängig und steht mit einem Unterdruckwächter 57 in Verbindung, der den Unterdruck im Inneren der Filterkammer 12 mißt.

Die beiden Führungen 5 und 50 haben eine derartige Länge, daß der Abstreifer 3 bei seinen Arbeitshüben oder -bewegungen nicht nur längs des Filters 2 selber bewegt wird, sondern über dieses hinaus bis in einen Bereich A bzw. B gelangt, in welchem der Abstreifer 3 keinen Kontakt mehr mit dem Filter 2 oder einer anderen Gegenfläche besitzt.

Die Fasern mitführende Luft gelangt durch die Rohrleitung 11 oder eine andere, nicht gezeigte Rohrleitung in die Filterkammer 12 des Absaugkastens 10 und strömt durch das Filter 2 zum Ventilator 130, von wo aus sie in bekannter Weise abgeführt wird. Die durch die Saugluftströmung in die Filterkammer 12 geführten Fasern werden vom Filter 2 zurückgehalten und setzen dieses mit der Zeit immer mehr zu. Hierdurch sinkt in der Filterkammer 12 der wirksame Unterdruck immer weiter ab, obwohl der Ventilator 130 in unveränderter Weise arbeitet. Dies hat zur Folge, daß an den Stellen, von wo der Flug abgesaugt werden soll, der Unterdruck ebenfalls nachläßt, so daß auch dort der Absaugeffekt ebenfalls reduziert wird.

Der Unterdruckwächter 57, die mittels einer Sonde den Unterdruck in der Filterkammer 12 fortlaufend überwacht, gibt bei Erreichen einer vorbestimmten Reduzierung des Soll-Unterdruckes ein entsprechendes Signal an die Steuervorrichtung 56, die nun das Ventil 54 (und evtl. ein einer weiteren Luftkammer des Zylinders 53 zugeordnetes Ventil - nicht gezeigt) betätigt. Der Linearantrieb 51 erteilt nun dem Abstreifer 3 eine Arbeitsbewegung über das Filter 2, der nun das auf dem Filter 2 angesammelte Fasermaterial 4 vom Filter 2 abstreift. Das Fasermaterial 4 fällt aufgrund der Schwerkraft hinab in die Sammelkammer 15, aus welcher es zu gegebener Zeit (in periodischen oder unregelmäßigen Zeitabschnitten) manuell oder automatisch entsorgt wird.

Dem Abstreifer 3 wird für diese Reinigung des Filters 2 eine lineare Arbeitsbewegung längs des Filters 2 erteilt. Damit keine komplexe Bewegungen benötigt werden, um Fasermaterial 4, das sich bei dieser Reinigungsbewegung evtl. zwischen Filter 2 und Abstreifer 3 festgesetzt haben sollte, freizugeben, wird der Abstreifer 3 nicht nur längs der Oberfläche dieses Filters 2, sondern unter Beibehaltung seiner bisherigen Bewegungsrichtung über die Längserstreckung des Filters 2 hinaus in eine Endstellung im Bereich A bzw. B gebracht, in welchem der Abstreifer 3 an keiner Gegenfläche mehr anliegt, d. h. ohne Kontakt mit einer derartigen Gegenfläche ist.

In den Fig. 1, 2 und 6 ist der Abstreifer 3 stets horizontal orientiert, so daß seine Arbeitsbewegungen demzufolge vertikal sein müssen. Dies ist jedoch nicht unabdingbare Voraussetzung für die Durchführung des geschilderten Verfahrens, hat jedoch hinsichtlich der Abführung des vom Filter 2 abgestreiften Fasermaterials 4 Vorteile, da dieses Fasermaterial 4 nicht parallel zur, d. h. längs der, Arbeitskante 31 des Abstreifers 3 fällt, sondern quer zu dessen Verlauf vom Abstreifer 3 weg. Die Gefahr, daß Fasermaterial 4 am Abstreifer 3 hängenbleibt, ist somit bei horizontaler Ausrichtung des Abstreifers 3 wesentlich geringer als bei vertikaler Anordnung desselben.

Prinzipiell ist es ausreichend, wenn der Abstreifer 3 für seine Arbeit entweder aus seiner Endstellung im Bereich A in seine andere Endstellung im Bereich B oder aber aus seiner Endstellung im Bereich B in seine Endstellung im Bereich A bewegt wird.

Für das Aktivieren des Linearantriebes 51, d. h. für das Auslösen der Filterreinigung, wird die Steuervorrichtung 56 auf einen gewünschten Wert voreingestellt, der beispielsweise bei 90% bis 70% des Soll-Unterdruckes liegt.

Bei entsprechender Ausbildung der Steuervorrichtung 56 kann auch noch ein zweiter Wert voreingestellt werden, der zwischen dem Soll-Unterdruck und dem Wert für das erste Aktivieren des Linearantriebes liegt und je nach Wahl der Größenordnung dieses ersten Wertes beispielsweise zwischen 95% und 80% des Soll-Unterdruckes liegt. Wird beispielsweise eine erste Reinigung des Filters 2 durchgeführt, ohne daß das Filter 2 restlos von Fasermaterial 4 befreit werden konnte, so kann es wünschenswert sein, daß sofort eine weitere Reinigung des Filters 2 durchgeführt wird. Beispielsweise wird der Abstreifer 3 während seiner ersten Arbeitsbewegung aus dem Bereich A in den Betreich B bewegt, so daß er jetzt bei seiner zweiten Arbeitsbewegung wieder zurück in seine Ausgangsstellung im Bereich A gebracht wird. Diesem zweiten Aktivieren des Linearantriebes 51 dient der erwähnte zweite, höhere voreinstellbare Wert, der bei Unterschreiten ein zweites Reinigen des Filters 2 bewirkt.

Um von vorne herein optimale Reinigungsverhältnisse zu erzielen, kann grundsätzlich eine zweiphasige Arbeitsbewegung, d. h. eine Doppelhubbewegung, vorgesehen werden, bei welcher der Abstreifer 3 während einer ersten Bewegungsphase zunächst aus dem Bereich A in den Bereich B und während einer zweiten Bewegungsphase zurück in den Bereich A gebracht wird.

Bei einer einphasigen Arbeitsbewegung, wie sie oben zunächst beschrieben wurde, muß sich der aktive Teil, d. h. der eigentliche Arbeitsteil, des Abstreifers 3 senkrecht zur Oberfläche des Filters 2 erstrecken, damit bei jeder dieser beiden möglichen einphasigen Arbeitsbewegungen im wesentlichen gleiche Bedingungen herrschen. Ist der Abstreifer 3 hierzu vertikal im Absaugkasten 10 angeordnet, so daß er eine horizontale Arbeitsbewegung ausführt, so sind auch die Bedingungen für das Herabfallen des abgestreiften Fasermaterials 4 in den Sammelraum 15 gleich.

Bei im wesentlicher vertikaler Bewegungsbahn (siehe Doppelpfeil f₃), deren Orientierung durch die Anordnung der Führungen 5 und 50 festgelegt ist, ist das Herabfallen des Fasermaterials 4 in den Sammelraum 15 nur während einer Arbeitsbewegung des Abstreifers 3 von oben nach unten ohne Schwierigkeiten möglich; bei umgekehrter Bewegungsrichtung wird dagegen das Fasermaterial 4 vom Abstreifer 3 am Herabfallen gehindert, bis es in der oberen Endstellung (gemäß Fig. 2 im Bereich A) freigegeben wird.

Wie die Fig. 1 und 2 zeigen, wird eine Freigabe des Fasermaterials 4 in dieser Endstellung A dadurch erreicht, daß sich nach oben im Anschluß an das Filter 2 eine Rutschfläche 120 anschließt, die sich nach oben immer weiter von der durch die Führungen 5 und 50 vorgegebenen Bewegungsbahn des Abstreifers 3 entfernt. Befindet sich der Abstreifer 3 somit in seiner Endstellung im Bereich A, so kann das Fasermaterial 4 vom Abstreifer 3 abfallen in Richtung Rutschfläche 120, an der es nun entlang gleiten kann, um durch den Spalt 121 zwischen Rutschfläche 120 und Abstreifer 3 hindurch in den Sammelraum 15 zu fallen. Das Fasermaterial 4, das auf diese Weise in den Sammelraum 15 gelangt, weist jetzt die Form eines Wickels oder gar Klumpens auf, wodurch dieses zu schwer ist, um während des Herabfallens an das Filter 2 zu gelangen und dort hängenzubleiben, auch wenn der Ventilator 130 nach wie vor eine gegen das Filter 2 gerichtete Saugluftströmung erzeugt.

Das vorstehend geschilderte Verfahren und die im Zusammenhang mit den Fig. 1 bis 6 beschriebene Vorrichtung können im Rahmen der vorliegenden Erfindung in vielfältiger Weise abgewandelt werden, beispielsweise durch Austausch von Merkmalen durch Äquivalente oder durch andere Kombinationen von Merkmalen. So liegt beispielsweise der Abstreifer 3 in der in den Fig. 2 bis 5 gezeigten, bevorzugten Ausbildung während seiner Reinigungs- bzw. Arbeitsbewegung nicht rechtwinklig am Filter 2 an, sondern weist gegenüber der Oberfläche des Filters 2 eine Neigung auf. Hierdurch ist seine Effektivität erhöht gegenüber einer rechtwinkligen Anordnung. Somit besitzt der Abstreifer 3 bei seinen beiden Bewegungen, d. h. bei der Bewegung aus dem Bereich A in den Bereich B bzw. bei seiner Bewegung aus dem Bereich B in den Bereich A, unterschiedliche Wirkungen in bezug auf die Reinigung des Filters 2. Dies wird in vorteilhafter Weise ausgenutzt, indem die Abwärtsbewegung des Abstreifers 3 dem Freischaben des Filters 2 dient, während seine Aufwärtsbewegung dazu dient, daß der Abstreifer 3 im wesentlichen über das sich auf der Oberfläche des Filters 2 befindliche Fasermaterial 4 hinweggleitet, d. h. möglichst ohne dieses Fasermaterial 4 oder Teilmengen hiervon mitzunehmen.

Damit der Abstreifer 3 stets gleiche Arbeitsverhältnisse vorfindet, ist es von Vorteil, wenn der Linearantrieb 51 den Abstreifer 3 grundsätzlich eine Doppelhubbewegung, d. h. eine zweiphasige Arbeitsbewegung, erteilt, bei der die erste Bewegungsphase (siehe Pfeil f₁ in Fig. 4) die Abwärts- bzw. Abstreifbewegung und die zweite Bewegungsphase (siehe Pfeil f₂ in Fig. 3) die Aufwärts- bzw. Passierbewegung umfaßt. Eine derartige zweiphasige Arbeitsbewegung des Abstreifers 3 ist jedoch auch bei horizontaler Bewegungsbahn des Abstreifers 3 möglich.

Zur Erzielung der beiden genannten Effekte (Abstreif- und Passierbewegung) wird die Neigung des Abstreifers 3 so festgelegt, daß dieser mit seiner während der ersten Bewegungsphase (Pfeil f₁) voreilenden Fläche, der Abstreiffläche 32, und der Oberfläche des Filters 2 einen stumpfen Winkel α (Fig. 1 und 3) einschließt. Es hat sich gezeigt, daß besonders gute Abstreifergebnisse erzielt werden, wenn dieser stumpfe Winkel α eine Größenordnung zwischen 105° und 135° aufweist, wenn auch andere Winkelgrößen in Abhängigkeit von den jeweiligen Arbeitsverhältnissen ebenfalls gute Ergebnisse bringen können.

Bei der gezeigten Ausbildung besitzt der aktive Teil des Abstreifers 3 die Form einer flachen Leiste mit im wesentlichen parallelen Abstreif- und Andrückflächen 32, 33.

Somit schließt die während dieser ersten Bewegungsphase (Pfeil f₁) nacheilende Fläche, die Andrückfläche 33, mit der Oberfläche des Filters 2 einen spitzen Winkel β (siehe Fig. 3) ein, der entsprechend zwischen 75° und 45° liegt. Es hat sich gezeigt, daß auf diese Weise nicht nur gute Abstreifverhältnisse, sondern auch gute Ergebnisse hinsichtlich des Passierens von evtl. während der ersten Bewegungsphase (Pfeil f₁) nicht restlos vom Filter 2 entfernten Resten von Fasermaterial 4 erreicht werden.

Das Filter 2 wird durch ein feines Sieb gebildet, das je nachdem, wie viel Fasermaterial 4 sich auf ihm abgesetzt hat, ein entsprechend starkes Vlies trägt und dem vom Ventilator 130 erzeugten Unterdruck unterschiedlich stark nachgibt und sich somit zu einem gewissen Grade durchbiegt. Um diese Wirkung zumindest teilweise zu kompensieren, weist gemäß dem in den Fig. 3 und 4 gezeigten Ausführungsbeispiel der Abstreifer 3 eine elastische Lippe 34 auf, deren eine Seite die Abstreiffläche 32 und deren andere Seite die Andrückfläche 33 bildet. Damit die elastische Lippe 34 während der ersten Bewegungsphase (Pfeil f₁) nicht ausweichen kann, ist sie auf der Seite ihrer Andrückfläche 33 durch eine Abstützung 35 abgestützt, die sich bis in Nähe der Arbeitskante 31 und somit bis in Nähe des Filters 2 erstreckt.

Es hat sich gezeigt, daß je nach Fasermaterial 4, das sich am Filter 2 festsetzt, die Lippe 34 unterschiedlich elastisch in ihrer Wirkung sein sollte. Da die Elastizität der Lippe 34 durch das Material, aus dem sie gefertigt ist, festliegt, ist eine Anpassung der Elastizität der elastischen Lippe 34 an die vorliegenden Arbeitsverhältnisse entweder durch Austausch der Lippe 34, was aufwendig ist, oder auf andere Weise möglich. Gemäß dem in Fig. 3 gezeigten Ausführungsbeispiel ist die Abstützung 35 relativ zur Arbeitskante 31 verstellbar. Zu diesem Zweck weist gemäß Fig. 3 der Abstreifer 3 ein spitzwinkliges Winkelprofil (Profilleiste 36) auf, auf welchem die elastische Lippe 34 mit ihrer Abstreiffläche 32 aufliegt und mit welchem sie mit Hilfe von Schraubverbindungen 37 (Schrauben 372 und Muttern 370) verbunden ist. Auf der Seite ihrer Andrückfläche 33 liegt auf der elastischen Lippe 34 die erwähnte Abstützung 35 auf, die ebenfalls mit Hilfe der Schraubverbindungen 37 (Schrauben 372 und Muttern 370) mit der Profilleiste 36 verschraubt ist. Dabei besitzt die Abstützung 35 für die Passage der Schrauben 372 Langlöcher 350, die sich quer zur Längserstreckung des Abstreifers 3 erstrecken und somit eine Verstellung der Abstützung 35 relativ zur Arbeitskante 31 erlauben. Gemäß Fig. 3 befindet sich die Abstützung 35, die zwecks Versteifung in Anpassung an die Form des Abstreifers 3 ebenfalls als Profilleiste ausgebildet ist, mit ihrem dem Filter 2 abgewandten Ende in Anlage an der Profilleiste 36, d. h. in ihrer vorderen Arbeitsstellung.

In Fig. 5, die später noch besprochen werden wird, sind die beiden Endstellungen 35a und 35b der Abstützung 35 gestrichelt dargestellt, während die momentan eingenommene Zwischenstellung mit durchgezogener Linie gezeigt ist. Es hat sich gezeigt, daß es ausreichend ist, wenn die Abstützung 35 senkrecht zur Arbeitskante 31 der Lippe 34 so einstellbar ist, daß sie mit ihrer der Arbeitskante 31 zugewandten Kante einen Abstand zwischen 3 und 8 mm von der Arbeitskante 31 aufweist, wenn auch in Sonderfällen eine Abweichung von diesen Maßen durchaus denkbar ist.

Die elastische Lippe 34 muß einerseits nachgiebig genug sein, damit sie sich ans Filter 2 anlegt, auch wenn dieses infolge des sich auf ihm abgelagerten Fasermaterials 4 relativ weit durchbiegt. Andererseits darf sie nicht zu weich sein, da sie sonst zu rasch abgenutzt wird und auch während der ersten Bewegungsphase (Pfeil f₁) über das Fasermaterial 4 hinweggleiten kann. Es hat sich gezeigt, daß beste Ergebnisse erzielt werden, wenn die Härte des für die elastische Lippe 34 verwendeten Materials zwischen 40 und 80 Shore beträgt.

Fig. 4 zeigt die elastische Lippe 34 während der ersten Bewegungsphase (siehe Pfeil f₁), während welcher der Abstreifer 3 aus einer oberen Endstellung im Bereich A nach unten bewegt wird und hierbei das abgelagerte Fasermaterial 4 vom Filter 2 streift. Aufgrund der Reibung der am Filter 2 mit ihrer Arbeitskante 31 anliegenden elastischen Lippe 34 hat diese die Tendenz, während der ersten Bewegungsphase (Pfeil f₁) nach hinten umzuknicken, wird jedoch durch die Abstützung 35 hieran gehindert. Auf diese Weise bleibt die Abstreifwirkung in vollem Umfang erhalten. In Fig. 4 ist die Lippe 34 nur teilweise im Schnitt gezeigt, um deutlich erkennbar andeuten zu können, daß die elastische Lippe statt einer rechtwinklig zu der Abstreiffläche 32 und der Andrückfläche 33 angeordneten Stirnfläche 310 auch eine geneigt angeordnete Stirnfläche 311 aufweisen kann. Die Arbeitskante 31 - die durch die Abstreiffläche 32 einerseits und die geneigte Stirnfläche 311 andererseits gebildet wird - weist somit einen spitzen Winkel γ auf, was das Abschaben des Fasermaterials 4 vom Filter 2 erleichtert.

Fig. 3 zeigt die elastische Lippe 34 während der zweiten Bewegungsphase (Pfeil f₂), wobei vorausgesetzt wurde, daß aus irgendeinem Grunde nach Durchführung der ersten Bewegungsphase eine größere Anhäufung von Fasermaterial 4 auf dem Filter verblieben ist. Gelangt nun die elastische Lippe 34 an diese Faseranhäufung, so weicht sie einfach aus, da sie auf der Seite ihrer Abstreiffläche 32 nicht abgestützt ist. Das Fasermaterial 4 kann somit bei der nächsten Abwärtsbewegung (in Richtung des Pfeiles f₁) des Abstreifers 3 nach unten abgestreift werden, wobei das losgelöste Fasermaterial 4 in die Sammelkammer 15 fällt.

Gemäß der in Fig. 3 gezeigten Ausbildung weist die elastische Lippe 34 am Übergang von der Abstreiffläche 32 in die Stirnfläche 310 bzw. 311 jeweils eine scharfe Kante auf. Um sowohl die Abstreifwirkung einerseits als auch das Passieren von auf dem Filter 2 verbliebenem Fasermaterial 4 durch die elastische Lippe 34 andererseits zu verbessern, ist gemäß Fig. 5 zwar eine spitze Arbeitskante 31 (siehe spitzen Winkel γ) vorgesehen; die Stirnfläche 312 geht jedoch stufenlos, d. h. allmählich, in die Andrückfläche 33 über.

Es hat sich gezeigt, daß bereits in den allermeisten Fällen während der ersten Bewegungsphase das Fasermaterial 4 rückstandslos vom Filter 2 abgeschabt bzw. abgenommen wird. Sollten unter besonderen Umständen, weil z. B. durch Öffnen der Tür 16 zum Entsorgen des sich zwischenzeitlich in der Sammelkammer 15 angesammelten Fasermaterials 4 der Unterdruck im Absaugkasten 10 abfällt und deshalb die Reinigung des Filters 2 ausgelöst wird, instabile Verhältnisse im Absaugkasten 10 auftreten, so ist es möglich, daß eine Wiederholung der Filterreinigung von Vorteil ist.

Wie oben bereits erwähnt, kann die elastische Lippe 34 mit Hilfe einer geeigneten Anzahl von Schraubverbindungen 37 (Schrauben 372 und Muttern 370 - siehe Fig. 3) mit der Profilleiste 36 des Abstreifers 3 verbunden sein. Dabei ist die Anordnung so getroffen, daß sich die Schraubenköpfe 371 der Schrauben 372 auf der der Andrückfläche 33 zugewandten Seite der elastischen Lippe 34 befinden, während sich die Muttern 370 auf der Seite der elastischen Lippe 34 mit der Abstreiffläche 32 angeordnet sind. Da sich der Abstreifer 3 zunächst in seiner Ausgangsstellung im Bereich A (siehe Fig. 2) befindet, aus welcher er während seiner ersten Bewegungsphase in Richtung zum Bereich B bewegt wird, streift der Abstreifer 3 das Fasermaterial 4 vom Filter 2 ab und kehrt sodann in seine Ausgangsstellung im Bereich B zurück. Während der kompletten zweiphasigen Arbeitsbewegung (beide Bewegungsphasen - Pfeile f₁ und f₂) befindet sich somit auf der Seite des Abstreifers 3 mit den Schraubenköpfen 371 kein Fasermaterial 4, so daß auch keine Gefahr besteht, daß sich hier Flug absetzt. Dagegen befindet sich das Fasermaterial 4 auf der Seite des Abstreifers 3 mit den Muttern 370. Es kann Flug entstehen aus Fasern, die beim Abstreifen vom Filter 2 nicht restlos in den sich bildenden Wickel oder Faserbatzen eingebunden wurden. Diese vagabundierenden Fasern haben die Tendenz, sich an unregelmäßigen Formen wie den Muttern 370 und den Enden der Schrauben 372 festzusetzen. Diese Tendenz ist größer, wenn sich die Muttern 370 in einem strömungstechnisch toten Bereich befinden, wie er durch den spitzwinkligen Raum (siehe Totraum 6 in Fig. 3) zwischen den beiden Schenkeln 360 und 361 der Profilleiste 36 gebildet wird.

Gemäß der in Fig. 3 gezeigten bevorzugten Ausbildung des Abstreifers 3 ist deshalb dieser Totraum 6 durch eine sich im wesentlichen über die gesamte Länge L (siehe Fig. 6) des Abstreifers 3 erstreckende Blende 60 abgeschirmt, die aus einer Profilleiste besteht, deren einer Schenkel 600 mit Hilfe der Schrauben 372 und Muttern 370 mit dem einen Schenkel 360 der Profilleiste 36 des Abstreifers 3 verbunden ist und deren anderer Schenkel 601 bis an den anderen Schenkel 361 der Profilleiste 36 des Abstreifers 3 heranreicht.

Da der Bereich zwischen den beiden Schenkeln 360 und 361 der Profilleiste 36 des Abstreifers 3 und der Blende 60, d. h. der Totraum 6 mit den Muttern 370 schlecht zugänglich ist, bereiten Montage- und Demontagearbeiten etwas Mühe. Zudem müssen die Muttern 370 auch gelockert werden, wenn die Abstützung 35 senkrecht zur Arbeitskante 31 verstellt werden soll. Somit ist es von Vorteil, wenn die Muttern 370 mit der Blende 60 drehfest verbunden sind, da sie dann von dieser gehalten werden, wobei diese Fixierung auf herkömmliche Weise, z. B. durch Anschweißen, geschehen kann. In diesem Fall genügt es, wenn lediglich die Schrauben 372 gut zugänglich sind.

Oben wurde bereits erwähnt, daß der Filter 2 bei Stärkerwerden des Vlieses, das sich auf ihr aus den auf ihr abgelagerten Fasern bildet, zunehmend die Neigung besitzt, sich durchzubiegen, was durch die Elastizität der elastischen Lippe 34 kompensiert wird. Um dieser Durchbiegungstendenz entgegenzuwirken, ist bei der in Fig. 6 gezeigten Ausbildung des Filters 2 vorgesehen, daß dieses auf seiner dem Ventilator 130 zugewandten Seite durch mehrere Stützstreben 7 abgestützt ist. Wie die Abbildung zeigt, sind die Stützstreben 7 geneigt sowohl gegenüber der Bewegungsbahn bzw. -richtung (Doppelpfeil f₃ in den Fig. 2 und 6) des Abstreifers 3 als auch zu dessen Längserstreckung quer zu dieser Bewegungsbahn. Die Anzahl der Stützstreben 7 ist so gewählt, daß der Filter 2 in jedem Bereich der Bewegungsbahn (Doppelpfeil f₃) des Abstreifers 3 mindestens zweimal abgestützt ist. Zu diesem Zweck ist bei quadratischer Ausbildung des Filters 2 eine erste, diagonal angeordnete Stützstrebe 7 vorgesehen, die beidseitig durch je eine weitere Stützstrebe 7 flankiert wird, die jeweils die Mitten der auf der jeweiligen Seite der ersten Stützstrebe 7 liegenden Seiten des Quadrates miteinander verbindet.

Andere Formen des Filters 2 (rechteckig, rund etc.) und zusätzliche Stützstreben 7 können, falls gewünscht, vorgesehen werden.

Wenn das sich auf dem Filter 2 ansammelnde Fasermaterial 4 einen Verbund bildet, der an keiner Stelle des Filters 2 unterbrochen ist, so läßt sich dieses Fasermaterial 4 auf besonders einfache und sichere Weise vom Filter 2 abstreifen. Um diesen geschlossenen Verbund des vliesförmig angesammelten Fasermaterials 4 zu gewährleisten, ist gemäß Fig. 6 vorgesehen, daß die Stützstreben 7 jeweils in Längsrichtung verteilt eine Vielzahl von Öffnungen oder Löchern 70 aufweisen, durch die die Luft hindurchgesaugt werden kann. Somit wird die Saugluftströmung nicht nur im Bereich zwischen den Stützstreben 7 durch das Filter 2 hindurchgesaugt, sondern gelangt auch im Bereich der Stützstreben 7 selber von der einen Seite des Filters 2 auf dessen andere Seite, so daß auch hier die Fasern gegen das Filter 2 gesaugt werden und sich ablagern. Bei entsprechend großer Anzahl derartiger Löcher 70 in den Stützstreben 7 bildet das Fasermaterial 4 somit auf der gesamten Fläche des Filters 2 ein ununterbrochenes Vlies, das später unter Bildung eines Wickels oder Batzens vom Filter 2 abgestreift wird. Diese Tendenz kann noch dadurch unterstützt werden, daß - wie in Fig. 6 gezeigt - die Löcher 70 als Langlöcher ausgebildet sind.

Die Steuerung der Filterreinigung kann zwar in an sich bekannter Weise zeitabhängig oder in Abhängigkeit vom Materialdurchstoß (z. B. Faserbandlänge) erfolgen, doch hat sich die Steuerung in Abhängigkeit von dem im Absaugkasten 10 gemessenen Unterdruck als besonders vorteilhaft herausgestellt, da hierdurch auf einfachste Weise die Aufrechterhaltung konstanter Unterdruckverhältnisse innerhalb vorgegebener Toleranzgrenzen gewährleistet werden kann. Dabei können nach Wunsch (und entsprechender Voreinstellung der Steuervorrichtung 56) eine oder mehrere Arbeitsbewegungen durchgeführt werden.

Oben wurde bereits erwähnt, daß die Steuervorrichtung 56 für die Steuerung des Abstreifers 3 allein in Abhängigkeit vom Erreichen eines voreingestellten Wertes für den Unterdruck abhängig ist. Da der Abstreifer 3 die Unterdruckverhältnisse auch während seiner Arbeitsbewegungen nicht spürbar beeinträchtigt, werden auch die Verhältnisse in bezug auf die in der Rohrleitung 11 und evtl. weiteren vorgesehenen Rohrleitungen nicht maßgeblich verändert, so daß die Strecke 1 oder andere Textilmaschine, in welchem sich das zu reinigende Filter 2 befindet, ohne Unterbrechung weiterarbeiten kann. Der Abstreifer 3 ist so konzipiert, daß er auch bei Aufrechterhalten des am Filter 2 anliegenden Unterdruckes einwandfrei arbeitet. Die Steuervorrichtung 56 zur Auslösung der Filterreinigung kann deshalb unabhängig von einer den Antriebsmotor 131 steuernden Steuervorrichtung 133 ausgebildet sein.

Zuvor wurde ein Absaugkasten 10 lediglich als Bestandteil einer Textilmaschine, wie z. B. einer Strecke 1, geschildert. Es versteht sich von selbst, daß der Absaugkasten 10 auch ein individuelles Anlagenelement sein kann, das von einer derartigen Textilmaschine unabhängig und mit derartigen Textilmaschinen lediglich über ein Rohrsystem verbunden ist.

Während des Abstreifens des Fasermaterials 4 vom Filter 2 wächst die abgeschabte und von dem Abstreifer 3 mitgenommene Fasermenge an, wobei mit zunehmender Größe dieser Fasermasse die Gefahr, daß kleinere Fasermengen zwischen Abstreifer 3 und Filter 2 gelangen könnten, ebenfalls anwächst. Gemäß dem in Fig. 2 gezeigten Ausführungsbeispiel sind deshalb die beiden Führungen 5 und 50 gegenüber dem Filter 2 geringfügig geneigt, und zwar dergestalt, daß der Abstreifer 3 am einen Ende seiner Bewegungsbahn (in Nähe des Bereiches A) stärker am Filter 2 anliegt als am anderen Ende seiner Bewegungsbahn (in Nähe des Bereiches B). Die Führungen 5 und 50 schließen somit mit der Ebene E, in welcher sich das Filter 2 befindet, einen sehr spitzen Winkel δ ein, der in der Größenordnung zwischen 1° und 4° liegt. Durch diese Neigung der Führungen 5 und 50 gegenüber der Ebene E wird der erwähnten Tendenz Rechnung getragen, indem der vom Abstreifer 3 in Richtung Filter 2 ausgeübte Druck während der ersten Bewegungsphase des Abstreifers 3 allmählich und stufenlos reduziert wird. Das Fasermaterial 4 wird während der ersten Bewegungsphase (Pfeil f₁) mit Fortschreiten der Arbeitsbewegung des Abstreifers 3 immer weniger abgestreift als vielmehr von der zusammenhängenden Masse des vliesförmigen Fasermaterials 4 vom Filter abgenommen.

Unabhängig davon, ob die Führungen 5 und 50 relativ zum Filter 2 geneigt angeordnet sind oder nicht, ist es erforderlich, daß der Abstreifer 3 nicht nur ausreichend Druck in Richtung Filter 2 ausübt, sondern auch in seiner jeweiligen Bewegungsrichtung, um das Fasermaterial 4 sicher vom Filter 2 zu entfernen. Der Abstreifer 3 muß somit sowohl quer zum Filter 2 als auch parallel hierzu sicher geführt werden. Aus diesem Grunde ist gemäß der in Fig. 6 gezeigten Ausbildung des Abstreifers 3 und seines Linearantriebes 51 vorgesehen, daß der Abstreifer 3 außer dem durch die Führung 5 in geeigneter Weise geführten Ende 300 ein mit dem Linearantrieb 51 verbundenes Ende 38 aufweist, das im Vergleich zum erstgenannten Ende 300 wesentlich länger ist, in Richtung der Führungen 5 und 50 gesehen. Es hat sich gezeigt, daß diese Länge I des Endes 38 des Abstreifers 3 und somit auch der Schlittens 52 des Linearantriebes 51 eine Größenordnung von im wesentlichen 30% bis 50% der Länge L des Abstreifers 3 aufweisen sollte.

Wenn auch in Fig. 2 eine horizontale Wand 14 zwischen der Filterkammer 12 und der Sammelkammer 15 gezeigt ist, so ist diese nicht in allen Fällen unbedingt erforderlich. Es hat sich nämlich gezeigt, daß der größte Teil des vom Filter 2 abgestreiften Fasermaterials 4 in Form eines Wickels oder Faserbatzens in die Sammelkammer 15 gelangt und daher eine geringe Tendenz zeigt, aufgewirbelt und erneut zur Ablagerung auf das Filter 2 zu gelangen, doch wird eine solche Neigung durch die erwähnte Wand 14 im Keim erstickt. Diese Wand 14, wenn sie vorgesehen ist, befindet sich unterhalb des Filters 2, jedoch noch oberhalb der unteren Endstellung des sich im Bereich B befindenden Abstreifers 3.

Gemäß den Fig. 1 und 2 schließt sich an die horizontale Wand 14 eine Rutschfläche 140 an. Diese erstreckt sich von der horizontalen Wand 14 nach oben, wobei sie sich mit zunehmender Entfernung von dieser horizontalen Wand 14 immer weiter vom Filter 2 entfernt. Die Minimallänge (in Richtung vom freien Ende zur horizontalen Wand 14 gesehen) der Rutschfläche 140 wird so gewählt, daß unter Berücksichtigung der zum Filter 2 gerichteten Saugluftströmung das vom Filter 2 abgeschabte und von dem Abstreifer 3 freigegebene Fasermaterial 4, wenn es nicht direkt in die Sammelkammer 15 fällt, auf diese schräge Rutschfläche 140 gelangt und somit längs dieser mit Sicherheit in die Sammelkammer 15 rutschen kann.

Die Rutschfläche 140 kann entfallen, wenn entweder keine horizontale Wand 14 vorgesehen ist oder die Wand 14 einen relativ großen Abstand von der Ebene E (siehe Fig. 2) aufweist, da dann das vom Filter 2 abgestreifte oder vom Abstreifer 3 zu irgendeinem Zeitpunkt freigegebene und abfallende Fasermaterial 4 zwischen dem Filter 2 und der horizontalen Wand 14 in die Sammelkammer 15 fällt. Im anderen Fall, wenn die horizontale Wand 14 bis dicht an die Bewegungsbahn des Abstreifers 3 und damit auch an die Ebene E mit dem Filter 2 heranreicht, sorgt diese Rutschfläche 140 dafür, daß alles herabfallende Fasermaterial 4 mit Sicherheit in die Sammelkammer 15 gelangt.

Die im Bereich A vorgesehene Rutschfläche 120 kann entfallen, wenn auf andere Weise dafür gesorgt wird, daß Fasern und Faseransammlungen von hier in die Sammelkammer 15 gelangen können. So kann der Übergang vom Filter 2 in den Bereich A durchaus stufenförmig ausgebildet sein, wenn durch entsprechende Einleitung der Saugluftströmung(en) in die Filterkammer 12 der Bereich A so durchströmt wird, daß Fasermaterial, das hierher gelangt ist, sich im Bereich der Saugluftströmung(en) befindet und von dieser oder diesen auf ihrem Weg zum Filter 2 mitgerissen wird.

### Bezugszeichenliste

- 1: Strecke
- 10: Absaugkasten
- 11: Rohrleitung
- 12: Filterkammer
- 120: Rutschfläche
- 121: Spalt
- 13: Absaugkammer
- 130: Ventilator
- 131: Antriebsmotor
- 132: Steuerleitung
- 133: Steuervorrichtung
- 14: Wand
- 140: Rutschfläche
- 15: Sammelkammer
- 16: Tür

- 2: Filter
- 20: Trichter

- 3: Abstreifer
- 30: Nase
- 300: Ende
- 31: Arbeitskante

- 310: Stirnfläche
- 311: Stirnfläche
- 312: Stirnfläche
- 32: Abstreiffläche
- 33: Andrückfläche
- 34: Lippe
- 35: Abstützung
- 35a: Endstellung
- 35b: Endstellung
- 350: Langloch
- 36: Profilleiste
- 360: Schenkel
- 361: Schenkel
- 37: Schraubverbindung
- 370: Mutter
- 371: Schraubenkopf
- 372: Schraube
- 38: Ende

- 4: Fasermaterial

- 5: Führung
- 50: Führung
- 51: Linearantrieb
- 52: Schlitten
- 53: Zylinder
- 54: Ventil
- 55: Druckluftleitung
- 56: Steuervorrichtung
- 560: Steuerleitung
- 57: Unterdruckwächter

- 6: Totraum
- 60: Blende
- 600: Schenkel
- 601: Schenkel

- 7: Stüfzstrebe
- 70: Loch

- A: Bereich
- B: Bereich
- E: Ebene
- L: Länge

- f₁: Pfeil
- f₂: Pfeil
- f₃: Doppelpfeil
- I: Länge

- α: Winkel
- β: Winkel
- γ: Winkel
- δ: Winkel

## Patentansprüche

1. Verfahren zum Ausfiltern von Fasern aus einem Luftstrom, bei welchem zur Reinigung eines in einem Absaugkasten (10) angeordneten, im wesentlichen ebenen Filters (2) ein Abstreifer (3) längs der Oberfläche des Filters (2) bewegt wird, **dadurch gekennzeichnet, daß** dem Abstreifer (3) zwischen einer ersten und einer zweiten Endstellung, in welchen der Abstreifer (3) ohne Kontakt mit einer Gegenfläche ist, eine Arbeitsbewegung über die Oberfläche des Filters (2) hinaus in die erste bzw. die zweite Endstellung erteilt wird.

2. Verfahren nach Anspruch 1, **dadurch gekennzeichnet, daß** die Arbeitsbewegung linear ist.

3. Verfahren nach Anspruch 1 oder 2, **dadurch gekennzeichnet, daß** der Abstreifer (3) während seiner Arbeitsbewegung in einer ersten Bewegungsphase aus seiner ersten Endstellung bis in die zweite Endstellung und in einer zweiten Bewegungsphase wieder zurück in die erste Endstellung bewegt wird.

4. Verfahren nach Anspruch 3, **dadurch gekennzeichnet, daß** während der ersten Bewegungsphase des Abstreifers (3) das Fasermaterial vom Filter (2) abgeschabt wird, während es während der zweiten Bewegungsphase des Abstreifers (3) gegen das Filter (2) gedrückt wird und der Abstreifer (3) im wesentlichen ohne Mitnahme des Fasermaterials über dieses hinweg zurück bewegt wird.

5. Verfahren nach Anspruch 3 oder 4, **dadurch gekennzeichnet, daß** der in Richtung Filter (2) ausgeübte Druck während der ersten Bewegungsphase des Abstreifers (3) allmählich reduziert wird.

6. Verfahren nach einem oder mehreren der Ansprüche 1 bis 5, **dadurch gekennzeichnet, daß** dem Abstreifer (3) eine im wesentlichen vertikale Arbeitsbewegung erteilt wird.

7. Verfahren nach Anspruch 6, **dadurch gekennzeichnet, daß** der Abstreifer (3) während der ersten Bewegungsphase von oben nach unten und während der zweiten Bewegungsphase von unten nach oben bewegt wird.

8. Verfahren nach einem oder mehreren der Ansprüche 1 bis 7, **dadurch gekennzeichnet, daß** der Unterdruck in der Filterkammer (12) gemessen wird und bei Abfallen des gemessenen Unterdruckes unter einen vorgegebenen Sollwert der Abstreifer (3) mindestens einmal zum Durchführen der Arbeitsbewegung aktiviert wird.

9. Verfahren nach Anspruch 8, **dadurch gekennzeichnet, daß** der Abstreifer (3) sofort zum Durchführen seiner Arbeitsbewegung erneut aktiviert wird, wenn nach Durchführen einer vorangegangenen Arbeitsbewegung der ermittelte Meßwert einen vorgegebenen zweiten Sollwert unterschreitet.

10. Verfahren nach einem oder mehreren der Ansprüche 1 bis 9, **dadurch gekennzeichnet, daß** der Unterdruck aufrechterhalten wird, während der Abstreifer (3) zur Durchführung seiner Arbeitsbewegung aktiviert wird.

11. Vorrichtung zum Ausfiltem von Fasern aus einem Luftstrom, mit einer mit einer Unterdruckquelle in Verbindung stehenden Absaugkammer (13), von welcher eine Filterkammer (12) durch ein im wesentlichen ebenes Filter (2) getrennt ist, längs welchem auf seiner der Unterdruckquelle (130) abgewandten Seite ein Abstreifer (3) bewegbar ist, nach einem oder mehreren der Ansprüche 1 bis 9, **dadurch gekennzeichnet, daß** dem Abstreifer (3) ein steuerbarer Antrieb (51) zugeordnet ist, mit dessen Hilfe der Abstreifer (3) zur Durchführung seiner Arbeitsbewegung zwischen zwei Endstellungen bewegbar ist, wobei die beiden Endstellungen sich außerhalb der Oberfläche des Filters (2) in einem Bereich (A, B) befinden, in welchem der Abstreifer (3) ohne Kontakt mit einer Gegenfläche ist.

12. Vorrichtung nach Anspruch 11, **dadurch gekennzeichnet, daß** der Antrieb ein Linearantrieb (51) ist.

13. Vorrichtung nach Anspruch 11 oder 12, **dadurch gekennzeichnet, daß** der Abstreifer (3) so ausgebildet und zur Oberfläche des Filters (2) geneigt ist, daß seine während der ersten Bewegungsphase voreilende Abstreiffläche (32) mit der Oberfläche des Filters (2) einen stumpfen Winkel (α) und seine während dieser Bewegungsphase nacheilende Andrückfläche (33) mit der Oberfläche des Filters (2) einen spitzen Winkel (β) einschließt.

14. Vorrichtung nach Anspruch 13, **dadurch gekennzeichnet, daß** der stumpfe Winkel (α) zwischen 105° und 135° liegt.

15. Vorrichtung nach einem oder mehreren der Ansprüche 11 bis 14, **dadurch gekennzeichnet, daß** der Abstreifer (3) eine elastische Lippe (34) mit einer sich auf ihrer der Andrückfläche (33) zugewandten Seite bis in Nähe des Filters (2) erstreckende Abstützung (35) aufweist.

16. Vorrichtung nach Anspruch 15, **dadurch gekennzeichnet, daß** die elastische Lippe (34) eine Härte zwischen 40 und 80 Shore aufweist.

17. Vorrichtung nach einem oder mehreren der Ansprüche 15 bis 16, **dadurch gekennzeichnet, daß** die elastische Lippe (34) eine spitzwinkelige Arbeitskante (31) aufweist, die einerseits durch die Abstreiffläche (32) und andererseits durch eine die Abstreiffläche (32) und die Andrückfläche (33) voneinander trennende Stirnfläche (311) begrenzt ist.

18. Vorrichtung nach einem oder mehreren der Ansprüche 15 bis 17, **dadurch gekennzeichnet, daß** die Stirnfläche (310, 311) der elastischen Lippe (34) allmählich in die Andrückfläche (33) übergeht.

19. Vorrichtung nach einem oder mehreren der Ansprüche 15 bis 18, **dadurch gekennzeichnet, daß** die Abstützung (35) relativ zur elastischen Lippe (34) senkrecht zur Arbeitskante (31) verstellbar ist.

20. Vorrichtung nach Anspruch 19, **dadurch gekennzeichnet, daß** die Abstützung (35) von der Arbeitskante (31) einen Abstand von 3 bis 8 mm aufweist.

21. Vorrichtung nach einem oder mehreren der Ansprüche 11 bis 20, **dadurch gekennzeichnet, daß** der Abstreifer (3) ein spitzwinkeliges Winkelprofil (36) aufweist.

22. Vorrichtung nach Anspruch 21, **dadurch gekennzeichnet, daß** der Abstreifer (3) mit der elastischen Lippe (34) mittels mehrerer Schraubverbindungen (37) verbunden ist, deren Muttern (370) sich in dem von den beiden Schenkeln (360, 361) des Winkelprofils (36) umschlossenen Bereich (6) befinden.

23. Vorrichtung nach Anspruch 22, **dadurch gekennzeichnet, daß** die Muttern (370) durch eine sich im wesentlichen über die gesamte Länge des Abstreifers (3) erstreckende Blende (60) abgedeckt sind.

24. Vorrichtung nach einem oder mehreren der Ansprüche 11 bis 23, **dadurch gekennzeichnet, daß** der Abstreifer (3) mit seinen beiden Enden (300, 38) jeweils in einer Führung (5, 50) geführt ist, wobei ein Ende (38) mit dem Linearantrieb (51) verbunden ist und in Längsrichtung der Führung (50) eine Länge (L) von im wesentlichen 30% bis 50% der Länge (I) des Abstreifers (3) aufweist.

25. Vorrichtung nach einem oder mehreren der Ansprüche 11 bis 24, **dadurch gekennzeichnet, daß** die Führungen (5, 50) des Abstreifers (3) gegenüber dem Filter (2) geneigt sind in der Weise, daß der Abstreifer (3) in Nähe seiner ersten Endstellung mit stärkerem Druck am Filter (2) anliegt als in Nähe seiner zweiten Endstellung.

26. Vorrichtung nach Anspruch 25, **dadurch gekennzeichnet, daß** der Neigungswinkel (δ) zwischen den Führungen (5, 50) des Abstreifers (3) und dem Filter (2) zwischen 1° und 4° festgelegt ist.

27. Vorrichtung nach Anspruch 11 bis 26, **dadurch gekennzeichnet, daß** die erste Endstellung des Abstreifers (3) oberhalb des Filters (2) angeordnet ist.

28. Vorrichtung nach Anspruch 27, **dadurch gekennzeichnet, daß** sich nach oben an das Filter (2) eine geneigte, sich von den Führungen (5, 50) des Abstreifers (3) entfernende Rutschfläche (120) anschließt.

29. Vorrichtung nach einem oder mehreren der Ansprüche 11 bis 28, **dadurch gekennzeichnet, daß** dem Absaugkasten (10) ein Unterdruckwächter (57) zugeordnet ist, der über eine Steuervorrichtung (56) mit dem Linearantrieb (51) des Abstreifers (3) steuermäßig verbunden ist.

30. Vorrichtung nach Anspruch 29, **dadurch gekennzeichnet, daß** die Steuervorrichtung (56) auf einen vorgegebenen Wert, insbesondere auf einen Wert von 90% bis 70% des Soll-Unterdruckes einstellbar ist, bei welcher der Abstreifer (3) zur Durchführung mindestens einer Arbeitsbewegung aktivierbar ist.

31. Vorrichtung nach einem oder mehreren der Ansprüche 11 bis 30, **dadurch gekennzeichnet, daß** das Filter (2) auf seiner dem Abstreifer (3) abgewandten Seite schräg zur Längserstreckung und zur Bewegungsrichtung des Abstreifers (3) verlaufende Stützstreben (7) aufweist, die derart angeordnet sind, daß das Filter (2) in jeder Arbeitsposition des Abstreifers (3) stets durch mindestens zwei derartige Stützstreben (7) abgestützt ist.

32. Vorrichtung nach Anspruch 31, **dadurch gekennzeichnet, daß** die Stützstreben (7) auf ihre Länge verteilt eine Vielzahl von Löchern (70) aufweisen.

33. Vorrichtung nach einem oder mehreren der Ansprüche 11 bis 32, **dadurch gekennzeichnet, daß** von der Filterkammer (12) mittels einer horizontalen Wand (14), die sich unterhalb des Filters (2), jedoch oberhalb der unteren Endstellung des Abstreifers (3) befindet und die sich bis in Nähe der durch die Führungen (5, 50) festgelegten Bewegungsbahn des Abstreifers (3) erstreckt, eine Sammelkammer (15) für das abgestreifte Fasermaterial (4) abgetrennt ist.

34. Vorrichtung nach Anspruch 33, **dadurch gekennzeichnet, daß** sich an die horizontale Wand (14) eine Rutschfläche (140) anschließt, die sich nach oben erstreckt und mit zunehmender Entfernung von der horizontalen Wand (14) immer weiter vom Filter (2) entfernt.

## Claims

1. Process for filtering fibres from an air current, in which a wiper (3) is moved along the surface of the filter (2) for the purpose of cleaning this essentially flat filter (2) arranged in an intake box (10), characterised such that the wiper (3) has no contact with an opposite surface and performs its working movement over the surface of the filter (2) and beyond into the first or the second end position.

2. Process in accordance with Patent Claim 1, characterised such that the working movement is linear.

3. Process in accordance with Patent Claim 1 or 2, characterised such that during its working movement, the wiper (3) is moved out of its first end position to the second end position in a first movement phase and back again to the first end position in a second movement phase.

4. Process in accordance with Patent Claim 3, characterised such that during the first movement phase of the wiper (3), the fibre material is scraped from filter (2) while the wiper (3) is pressed against the filter (2) during the second movement phase and the wiper (3) moves back over the fibre material essentially without picking it up.

5. Process in accordance with Patent Claim 3 or 4, characterised such that the pressure exerted in the direction of filter (2) is gradually reduced during the first movement phase of the wiper (3).

6. Process in accordance with one or several of the Patent Claims 1 to 5, characterised such that the wiper (3) essentially performs a vertical working movement.

7. Process in accordance with Patent Claim 6, characterised such that the wiper (3) is moved from top to bottom during the first movement phase and from bottom to top during the second movement phase.

8. Process in accordance with one or several of the Patent Claims 1 to 7, characterised such that the partial vacuum (negative pressure) in the filter chamber (12) is measured and in the event of the measured partial vacuum dropping below a specified target value (threshold), the wiper (3) is activated at least once to execute the working movement.

9. Process in accordance with Patent Claim 8, characterised such that the wiper (3) is immediately activated again to execute its working movement if the determined measured value after performing its previous working movement undershoots a specified second target value.

10. Process in accordance with one or several of the Patent Claims 1 to 9, characterised such that the partial vacuum is maintained while the wiper (3) is activated to execute its working movement.

11. Apparatus for filtering fibres from an air current, featuring an intake chamber (13) connected to a partial vacuum source, from which a filter chamber (12) is separated by an essentially flat filter (2), along which a scraper (3) can be moved on the side facing away from the partial vacuum source (130), in accordance with one or several of the Patent Claims 1 to 9, characterised such that a controllable drive (51) is assigned to the wiper (3), with the aid of which the wiper (3) can be moved between two end stages to execute its working movement with the two end stages located outside the surface of the filter (2) in an area (A, B) where the wiper (3) has no contact with an opposite surface.

12. Apparatus in accordance with Patent Claim 11, characterised such that the drive is designed as a linear drive (51).

13. Apparatus in accordance with Patent Claim 11 to 12, characterised such that the wiper (3) is designed and tilted towards the surface of the filter (2) such that the leading scraping face (32) forms an obtuse angle (α) with the surface of the filter (2) during the first movement phase and its trailing contact face (33) forms an acute angle (β) with the surface of the filter during this movement phase.

14. Apparatus in accordance with Patent Claim 13, characterised such that the obtuse angle (α) is between 105° and 135°.

15. Apparatus in accordance with one or several of the Patent Claims 11 to 14, characterised such that the wiper (3) features a flexible lip (34) with a support (35) extending up to the vicinity of the filter (2) on the side facing towards the contact face (33).

16. Apparatus in accordance with Patent Claim 15, characterised such that the flexible lip (34) has a Shore hardness between 40 and 80.

17. Apparatus in accordance with one or several of the Patent Claims 15 to 16, characterised such that the flexible lip (34) features a sharp-cornered working edge (31) that is limited on the one side by the scraping face (32) and on the other side by an end face (311) separating the scraping face (32) and the contact face (33).

18. Apparatus in accordance with one or several of the Patent Claims 15 to 17, characterised such that the end face (310, 311) of the flexible lip (34) gradually merges into the contact face (33).

19. Apparatus in accordance with one or several of the Patent Claims 15 to 18, characterised such that relative to the flexible lip (34) the support (35) is vertically adjustable with respect to the working edge (31).

20. Apparatus in accordance with Patent Claim 19, characterised such that the support (35) is set at a distance of 3 to 8 mm from the working edge (31).

21. Apparatus in accordance with one or several of the Patent Claims 11 to 20, characterised such that the wiper (3) features a sharp-edged angle section (36).

22. Apparatus in accordance with Patent Claim 21, characterised such that the wiper (3) together with the flexible lip (34) is mounted by means of several screw connections (37) with their nuts (370) located in the area (6) enclosed by the two sides (360, 361) of the angle section (36).

23. Apparatus in accordance with Patent Claim 22, characterised such that the nuts (370) are covered by a panel (60) essentially extending over the entire length of the wiper (3).

24. Apparatus in accordance with one or several of the Patent Claims 11 to 23, characterised such that both ends (300, 38) of the wiper (3) are directed in a guide (5, 50) where one end (38) is connected to a linear drive (51) and has a length (L) in longitudinal direction of the guide (50) essentially amounting to 30% to 50% of the length (I) of the wiper (3).

25. Apparatus in accordance with one or several of the Patent Claims 11 to 24, characterised such that the guides (5, 50) of the wiper (3) are inclined with respect to the filter (2) in such a way that the wiper (3) rests on the filter (2) with greater pressure in the vicinity of its first end position than in the vicinity of its second end position.

26. Apparatus in accordance with Patent Claim 25, characterised such that the angle of inclination (δ) between the guides (5, 50) of the wiper (3) and the filter (2) is defined between 1° and 4°.

27. Apparatus in accordance with one or several of the Patent Claims 11 to 26, characterised such that the first end position of the wiper (3) is arranged above the filter (2).

28. Apparatus in accordance with Patent Claim 27, characterised such that a slip face (120), inclined such that it moves away from the guides (5, 50) of the wiper (3), joins the filter (2) at the top.

29. Apparatus in accordance with one or several of the Patent Claims 11 to 28, characterised such that a vacuum monitor (57), which is connected in terms of the control via a control device (56) to the linear drive (51) of the wiper (3), is assigned to the intake box (10).

30. Apparatus in accordance with Patent Claim 29, characterised such that the control device (56) is adjustable to a specified value, in particular to a value from 90% to 70% of the set vacuum, at which the wiper (3) can be activated to execute at least one working movement.

31. Apparatus in accordance with one or several of the Patent Claims 11 to 30, characterised such that the filter (2) features support struts (7) extending obliquely with respect to the longitudinal extension and movement direction of the wiper (3) on the side facing away from the wiper (3) that are arranged in such a way that the filter (2) is supported by at least two such support struts (7) in any working position of the wiper (3).

32. Apparatus in accordance with Patent Claim 31, characterised such that the support struts (7) feature a large number of holes (70) distributed over their length.

33. Apparatus in accordance with one or several of the Patent Claims 11 to 32, characterised such that a collecting chamber (15) for the removed fibre material (4) is separated from the filter chamber (12) by means of a horizontal panel (14) that is located below the filter (2) but above the lower end position of the wiper (3) and which extends up to the vicinity of the movement track of the wiper (3) defined by the guides (5, 50).

34. Apparatus in accordance with Patent Claim 33, characterised such that a slip face (140) that extends upwards and further away from the filter (2) with increasing distance from the horizontal panel (14) joins the horizontal panel (14).

## Revendications

1. Procédé pour la filtration de fibres d'un courant d'air, dans lequel un racleur (3) est déplacé le long de la surface du filtre (2) pour nettoyer un filtre (2) essentiellement plat, disposé dans une chambre d'aspiration (10), **caractérisé en ce qu'**il est communiqué au racleur (3) un mouvement de travail qui dépasse la surface du filtre (2) et qui se situe entre une première et une deuxième position finale dans lesquelles le racleur (3) n'est pas en contact avec une surface antagoniste.

2. Procédé selon la revendication 1, **caractérisé en ce que** le mouvement de travail est linéaire.

3. Procédé selon la revendication 1 ou 2, **caractérisé en ce que** le racleur (3) est déplacé, au cours de son mouvement de travail, dans une première phase de mouvement, de sa première position finale jusque dans sa deuxième position finale et, dans une deuxième phase de mouvement, de nouveau retour dans sa première position finale.

4. Procédé selon la revendication 3, **caractérisé en ce que** pendant la première phase de mouvement du racleur (3), la matière fibreuse est raclée du filtre (2), tandis que, pendant la deuxième phase de mouvement du racleur (3), elle est pressée contre le filtre (2), le racleur (3) étant déplacé dans le mouvement de retour par-dessus la matière fibreuse, essentiellement sans enlever de la matière fibreuse.

5. Procédé selon la revendication 3 ou 4, **caractérisé en ce que** la pression exercée en direction du filtre (2) est peu à peu réduite pendant la première phase de mouvement du racleur (3).

6. Procédé selon l'une ou plusieurs des revendications 1 à 5, **caractérisé en ce qu'**il est communiqué au racleur (3) un mouvement de travail essentiellement vertical.

7. Procédé selon la revendication 6, **caractérisé en ce que** le racleur (3) est déplacé pendant la première phase de mouvement d'en haut en bas et pendant la deuxième phase de mouvement d'en bas en haut.

8. Procédé selon l'une ou plusieurs des revendications 1 à 7, **caractérisé en ce que** la dépression est mesurée dans la chambre de filtration (12) et que le racleur (3) est activé au moins une fois pour effectuer le mouvement de travail lorsque la dépression mesurée chute en-dessous de la valeur de consigné prédéterminée.

9. Procédé selon la revendication 8, **caractérisé en ce que** le racleur (3) est immédiatement de nouveau activé pour effectuer son mouvement de travail lorsque, après exécution du mouvement de travail précédent, la valeur de mesure établie se situe en-dessous d'une deuxième valeur de consigne prédéterminée.

10. Procédé selon l'une ou plusieurs des revendications 1 à 9, **caractérisé en ce que** la dépression est maintenue pendant que le racleur (3) est activé pour effectuer son mouvement de travail.

11. Dispositif pour la filtration de fibres d'un courant d'air comprenant une chambre d'aspiration (13) qui est en liaison avec une source de dépression et dont une chambre (12) de filtration est séparée par un filtre (2) essentiellement plat, le long duquel un racleur (3) est susceptible d'être déplacé sur sa face opposée à la source (130) de dépression, selon l'une ou plusieurs des revendications 1 à 9, **caractérisé en ce qu'**il est affecté au racleur (3) une commande (51) susceptible d'être commandée, au moyen de laquelle le racleur (3) peut être déplacé pour effectuer son mouvement de travail entre deux positions finales, les deux positions finales étant situées hors de la surface du filtre (2), dans un domaine (A, B), où le racleur (3) est sans contact avec une surface antagoniste.

12. Dispositif selon la revendication 11, **caractérisé en ce que** la commande est une commande linéaire (51).

13. Dispositif selon la revendication 11 ou 12, **caractérisé en ce que** le racleur (3) est conçu et qu'il est incliné vers la surface du filtre (2) de telle manière que sa surface (32) racleuse avancée pendant la première phase de mouvement renferme un angle (α) obtus avec la surface du filtre (2) et que sa surface (33) de pression en arrière pendant cette phase de mouvement renferme un angle aigu (β) avec la surface du filtre (2).

14. Dispositif selon la revendication 13, **caractérisé en ce que** l'angle (α) obtus est compris entre 105° et 135°.

15. Dispositif selon l'une ou plusieurs des revendications 11 à 14, **caractérisé en ce que** le racleur (3) présente une lèvre (34) élastique avec un appui (35) prévu sur son côté orienté vers la surface (33) de pression et s'étendant jusqu'à proximité du filtre (2).

16. Dispositif selon la revendication 15, **caractérisé en ce que** la lèvre (34) élastique présente une dureté comprise entre 40 et 80 Shore.

17. Dispositif selon l'une ou plusieurs des revendications 15 à 16, **caractérisé en ce que** la lèvre (34) élastique présente une arête de travail (31) à angle aigu qui est limitée, d'une part, par la surface (32) racleuse et, d'autre part, par une surface frontale (311) séparant la surface (32) racleuse de la surface (33) de pression.

18. Dispositif selon l'une ou plusieurs des revendications 15 à 17, **caractérisé en ce que** la surface frontale (310, 311) de la lèvre (34) élastique se transforme peu à peu en la surface (33) de pression.

19. Dispositif selon l'une ou plusieurs des revendications 15 à 18, **caractérisé en ce que** l'appui (35), par rapport à la lèvre (34) élastique, est réglable verticalement par rapport à l'arête de travail (31).

20. Dispositif selon la revendication 19, **caractérisé en ce que** l'appui (35) présente une distance par rapport à l'arête de travail (31) qui est comprise entre 3 et 8 mm.

21. Dispositif selon l'une ou plusieurs des revendications 11 à 20, **caractérisé en ce que** le racleur (3) présente une cornière (36) à angle aigu.

22. Dispositif selon la revendication 21, **caractérisé en ce que** le racleur (3) est relié avec la lèvre (34) élastique au moyen de plusieurs vissages (37) dont les écrous (370) sont situés dans le domaine renfermé (6) par les deux ailes (360, 361) de la cornière (36).

23. Dispositif selon la revendication 22, **caractérisé en ce que** les écrous (370) sont recouverts par une cache (60) s'étendant essentiellement sur toute la longueur du racleur (3).

24. Dispositif selon l'une ou plusieurs des revendications 11 à 23, **caractérisé en ce que** le racleur (3) est guidé par ses deux extrémités (300, 38) respectivement dans un guidage (5, 50), l'une des extrémités (38) étant reliée avec la commande linéaire (51) et présentant, en direction longitudinal du guidage (50), une longueur (L) comprise essentiellement entre 30 % et 50 % de la longueur (I) du racleur (3).

25. Dispositif selon l'une ou plusieurs des revendications 11 à 24, **caractérisé en ce que** les guidages (5, 50) du racleur (3) sont inclinés par rapport au filtre (2) de telle manière, qu'à proximité de sa première position finale le racleur (3) s'appuie avec une pression plus forte contre le filtre (2) qu'à proximité de sa deuxième position finale.

26. Dispositif selon la revendication 25, **caractérisé en ce que** l'angle d'inclinaison (δ) entre les guidages (5, 50) du racleur (3) et le filtre (2) est déterminé d'être compris entre 1° et 4°.

27. Dispositif selon les revendications 11 à 26, **caractérisé en ce que** la première position finale du racleur (3) est prévue au-dessus du filtre (2).

28. Dispositif selon la revendication 27, **caractérisé en ce qu'**une surface de glissement (120) incliné se rattache au filtre (2) vers le haut en s'écartant des guidages (5, 50) du racleur (3).

29. Dispositif selon l'une ou plusieurs des revendications 11 à 28, **caractérisé en ce qu'**à la chambre d'aspiration (10) il est affecté un manostat à ouverture minimale de pression (57) qui est relié, en ce qui concerne la commande, avec la commande linéaire (51) du racleur (3), par l'intermédiaire d'un élément de commande (56).

30. Dispositif selon la revendication 29, **caractérisé en ce que** l'élément de commande (56) est susceptible d'être réglé à une valeur prédéterminée, notamment à une valeur représentant 90 % à 70 % de la dépression exigée, à laquelle le racleur (3) est susceptible d'être activé pour effectuer au moins un mouvement de travail.

31. Dispositif selon l'une ou plusieurs des revendications 11 à 30, **caractérisé en ce que** le filtre (2) présente, sur son côté opposé au racleur (3), des montants d'appui (7) s'étendant de façon diagonale par rapport à l'étendue longitudinale et au sens de mouvement du racleur (3) et qui sont disposés de telle manière que, dans chaque position de travail du racleur (3), le filtre (2) est toujours appuyé par au moins deux de ces montants d'appui (7).

32. Dispositif selon la revendication 31, **caractérisé en ce que** les montants d'appui (7) présentent une multitude de trous (70) répartis sur leur longueur.

33. Dispositif selon l'une ou plusieurs des revendications 11 à 32, **caractérisé en ce qu'**une chambre collectrice (15) pour la matière fibreuse (4) enlevée est séparée de la chambre de filtration (12) moyennant une cloison horizontale (14) prévue au-dessous du filtre (2) mais au-dessus de la position finale inférieure du racleur (3) et qui s'étend jusqu'à proximité de la voie de déplacement du racleur (3), déterminée par les guidages (5, 50).

34. Dispositif selon la revendication 33, **caractérisé en ce qu'**à la paroi (14) horizontale il se rattache une surface glissante (140) s'étendant vers le haut et qui s'éloigne du filtre (2) dans la mesure où elle s'éloigne de la paroi horizontale (14).
